**Europäisches Patentamt**

**European Patent Office**

**Office européen des brevets**

(19)

(11) Publication number: **0 139 140**

**A1**

(12) # EUROPEAN PATENT APPLICATION

(21) Application number: **84109689.4**

(22) Date of filing: **14.08.84**

(51) Int. Cl.⁴: **C 07 F 9/38**

(30) Priority: **17.08.83 US 524063**

(43) Date of publication of application:
**02.05.85 Bulletin 85/18**

(84) Designated Contracting States:
**AT BE CH DE FR GB IT LI NL SE**

(71) Applicant: **STAUFFER CHEMICAL COMPANY**

**Westport Connecticut 06880(US)**

(72) Inventor: **Bayer, Arthur Craig**
**3 Somerston Road**
**Yorktown Heights N.Y. 10598(US)**

(72) Inventor: **Brokke, Mervin Edward**
**38 Tall Oaks Court**
**Stamford Connecticut 06903(US)**

(74) Representative: **Jaeger, Klaus, Dr. et al,**
**JAEGER & PARTNER Patentanwälte Bergstrasse 48 1/2**
**D-8035 München-Gauting(DE)**

(54) **Process for the formation of phosphonomethylated amino acids.**

(57) Phosphonomethylated amino acids can be prepared by reacting a dihalide of halomethylphosphonic acid with water to form a halomethylphosphonic acid followed by its reaction with the desired amino acid. Preferably, the process includes as an initial step the reaction of a phosphorus trihalide and formaldehyde to form the dihalide of halomethylphosphonic acid.

Croydon Printing Company Ltd.

## PROCESS FOR THE FORMATION OF
## PHOSPHONOMETHYLATED AMINO ACIDS

### Background of the Invention

#### Field of the Invention

The present invention relates to a process for the preparation of phosphonomethylated amino acids.

#### Description of the Prior Art

Various processes have been described for the preparation of phosphonomethylated amino acids. For example, in U.S. Patent Nos. 3,799,758 and 3,977,860 to J. E. Franz it is suggested that N-phosphonomethyl glycine (a known herbicidal compound) be prepared by reacting the amino acid (glycine) with chloromethylphosphonic acid. Rather than using glycine and chloromethylphosphonic acid as starting materials to synthesize such compounds, however, some more recent patents (e.g., U.S. Patent Nos. 3,923,877 and 4,008,296 to J. E. D. Barton) have rejected the approach described by the above-mentioned Franz patents and have suggested synthesizing N-phosphonomethylglycine from differing and, allegedly, cheaper starting materials, i.e., sodium cyanide, ammonium chloride, and formaldehyde, by using them to make 1,3,5-tricyanomethylhexahydro-1,3,5-triazine, followed by its reaction with an ester of phosphorus acid to form an ester of N-phosphonomethylglycinonitrile and its subsequent hydrolysis to form the desired product. Although the Barton patents indicate

C-7073

that the Franz approach required the prior preparation of chloromethylphosphonic acid, neither they nor the Franz patents further discuss or suggest means for doing so.

## Summary of the Present Invention

In its broadest embodiment, the present invention involves the reaction of a dihalide of halomethyl phosphonic acid with water to form the corresponding halomethylphosphonic acid and the subsequent reaction of the desired amino acid with such phosphonic acid to form the desired end product.

The present process, in a particularly preferred embodiment, involves the preparation of phosphonomethylated amino acids by:

(a)  reacting a phosphorus trihalide and formaldehyde to form the dihalide of halomethylphosphonic acid;

(b)  reacting the product from step (a) with water, as described above, to form halomethylphosphonic acid; and

(c)  reaction of the desired amino acid with the halomethylphosphonic acid to yield the N-phosphonomethylated amino acid of choice.

## Detailed Description of the Process of the Present Invention

The first step in the instant process, in a preferred embodiment, is the reaction of a suitable phosphorus trihalide, preferably phosphorus trichloride, with formaldehyde to form the dihalide of halomethylphosphonic acid which has the formula $XCH_2P(O)X_2$,

C-7073

where X can be chlorine or bromine, preferably chlorine. This reaction is known and is described in various prior art references, including U.S. Patent No. 2,874,184 to J. L. Van Winkle et al.; Chemical Abstracts, Vols. 45 and 48, 10191b(1951) and 564(b)(1954), respectively, and J. Amer. Chem. Soc. 75, 5738-5740 (1953). In general, the reaction can be conducted at temperatures of 160°C. - 300°C. using at least 1.5 moles of phosphorus trihalide per mole of formaldehyde. Preferably, the reaction is carried out under pressure (e.g., up to about 920 psig) using a suitable autoclave, e.g., one constructed of nickel to prevent potential corrosion problems from developing. If desired, a small amount of chlorine gas can be added towards the end of the reaction to reoxidize any undesired lower oxidation state phosphorus compounds formed by disproportionation reaction mechanisms from the desired P = O species.

The dihalide of halomethylphosphonic acid, most preferably obtained by the initial step described above, is then reacted with water to form the corresponding halomethylphosphonic acid of the formula $XCH_2P(O)(OH_2)$, where X is as defined above. This reaction can be accomplished, for example, by adding the reaction mixture resulting from the first step slowly to a sufficient amount of water to react with the dihalide product contained therein. This reaction can be conducted at temperatures from about 0°C. to about 100°C. The amount of water is preferably from about 5 - 30 times the theoretical amount needed. Further details of this process is contained in U.S. Patent No. 2,874,184 to J. L. Van Winkle et al. If desired, a strong acid, e.g., HCl, can be present in the water to suppress formation of phosphorus compounds having undesired phosphorus oxidation states.

The remaining portions of the instant process are generally known from the aforementioned Franz patents and involve reaction of the halomethylphosphonic acid with the amino acid of choice having the formula $HO_2CRNH_2$, where R is an unsubstituted or substituted alkylene moiety containing 1 to 20 carbon atoms in its backbone. Representative substituents for R include alkyl ($C_1-C_6$ alkyl), aryl, arylalkyl and nitrogen heterocycles (e.g., derived from pyrrole, indole, imidazole, purine, pyridine, etc.). A preferred amino acid and halomethylphosphoric acid can be improved in various ways. One way is to conduct the reaction under alkaline conditions (e.g., a pH of 9.5 - 10.5) with the phosphonic acid being gradually added to the amino acid, e.g., at the rate of 0.1 to 0.5 mole of phosphonic acid reactant per mole of amino acid reactant per hour. Both are in the form of their alkali metal salts in this preferred mode of reaction. Another way is to conduct the reaction at the above alkaline conditions in the presence of a water soluble polyamine catalyst having a sufficient concentration of amine nitrogen atoms to promote the reaction. One suitable polyamine catalyst is sold under the trademark PURIFLOC C-31 brand by Dow Chemical Company. The following Examples illustrate certain embodiments of the present invention.

C-7073

- 5 -

EXAMPLE 1

A corrosion resistant six gallon autoclave was used to manufacture the dichloride of chloromethylphosphonic acid. Flaked paraformaldehyde (2.27 kg., 91% purity) was charged into the vessel, and it was then sealed. While cooling the vessel, two 5.45 kg. portions of phosphorus trichloride were pressurized into the vessel with 13.6 atm. of nitrogen. The temperature varied between 150° and 200°C.; and the pressure varied between 6.8 and 13.6 atm. after addition of the first portion. The second portion was added after the pressure had peaked. The reactor was then heated to 265°C. and kept there for 2.5 hours. The reactor contents were then transferred to a holding tank.

Material was accumulated from the prior procedure. Into a glass lined reactor with condenser and receiver, 45.4 kg. of the crude product was charged. Cooling was applied to the reactor. A total of 1.36 kg. of chlorine was added at a rate of 2.27 kg. If the temperature exceeded 35-40°C., the rate of chlorine addition was slowed. After completion of the chlorine addition, the temperature was raised to 70°C. while the pressure was lowered to 100 mm Hg. Distilled impurities, including $POCl_3$, were collected. More impurities were then distilled by lowering the pressure to 10 mm Hg. The intended product was collected when the vapor and liquid temperature difference was 15°C. The product distilled at about 82°C.

- 6 -

0139140

## EXAMPLE 2

Five hundred milliliters of an aqueous solution containing about 35% hydrogen chloride with the remainder being water was added to a 1000 ml. round bottom, three neck flask equipped with a condenser, magnetic stirrer, pot thermometer, addition funnel and outlet to a sodium hydroxide trap. The flask was heated to 70°C. and then 84 gm. (0.5 mole) of chloromethylphosphonic dichloride, from Example 1, was added over a period of 20 minutes. Heating was continued for two hours, and the mixture was stirred without heating overnight. The next day, the mixture was heated at 70°C., for two additional hours and was then allowed to cool to 35°C. The mixture was rotary concentrated to a solid (lavender crystals). The product had a melting point of 84° - 86°C. and weighed 65 gm. The following analytical results confirmed the presence of the desired product, $ClCH_2P(O)-(OH)_2$: $^1H$ NMR: 3.65 ppm (d) and $^{31}P$ NMR: + 16.4 (singlet) - Ref.: Von Wagner: + 17.8: No starting material was detected.

Into the same type of equipment used previously was placed 65.0 gm. (0.5 mole) of the previously prepared chloromethyl phosphonic acid, 37.5 gm. (0.5 mole) of glycine, and 200 ml. of water. The pH of the solution was adjusted to 10 by the addition of 50% sodium hydroxide in aqueous solution. This caused the solution to heat up to 65°C., and the solution was then further heated to 98°C. over 1.5 hours. The reaction solution was heated intermittently for a total of twenty-two hours at 98° - 104°C. over the next seven days. When necessary, the pH was adjusted to 10 by the

C-7073

addition of 50% sodium hydroxide. A total of 88 ml. of 50% sodium hydroxide was used. While cooling the reaction solution, ninety-five milliliters of concentrated hydrochloric acid was added to it. The reaction mixture was then evaporated to dryness with the aid of a hot water bath and water aspirator vacuum. The crystalline product was digested for two hours at room temperature with 100 ml. of concentrated hydrochloric acid. The grainy solid was then filtered away from the product solution. Liquid was removed from the solution with the aid of a hot water bath and water aspirator vacuum to give a gummy solid weighing 87.2 gm. The solid was precipitated from water by adding ethanol and heating. The mixture was then cooled, and the product was removed by filtration and washed with ethanol. The product was dried in a vacuum dessicator and weighed 27.0 gm. which was 31% of the theoretical yield.

Proton and $^{31}$H nmr: 3.35 ppm (doublet) and 4.1 ppm (singlet); $^{31}$P nmr: + 87 ppm. Mass spectrum confirmed the phosphonomethylglycine structure plus a bis(phosphonomethyl) glycine impurity. Titration and ir also supported phosphonomethylglycine formation and ion-exchange high pressure liquid chromatography of the product versus authentic phosphonomethylglycine proved its preparation.

## EXAMPLE 3

The same type of apparatus used in Example 2 was employed in this Example. Five hundred milliliters of concentrated hydrochloric acid (37.5 HCl) was heated to 70°C. To the heated acid was then added in a dropwise manner 84 gm. (0.5 mole) of chloromethyl phosphonic dichloride. The addition was completed in about 20 minutes and a temperature of 75 - 85°C. was maintained for one additional hour. The resulting mixture was cooled and left under nitrogen gas overnight. Heating was resumed the next day at 80°C. - 85°C. for about three hours. The mixture was cooled to 40°C. and then rotary concentrated with a hot water bath to a crystalline solid. The solid was removed from the flask and air dried. It had a weight of 65.25 gm.

Into the same type of apparatus used in Example 2 was placed 24 gm. (15.7 ml. or 0.3 mole) of a 50% aqueous solution of sodium hydroxide which was warmed to about 50°C. Glycine (7.5 gm or 0.1 mole) was added to this solution. The chloromethylphosphonic acid (13.05 gm or 0.1 mole) was added, and the heat of neutralization caused the temperature to rise to 110°C. Heating was suspended, and the solution was stirred. The contents of the flask were cooled to 90°C. and heating was resumed in order to hold the temperature at 90 - 110°C. The pH of the solution was maintained at 10 - 11 by addition of 50% sodium hydroxide. Reaction time was a total of twenty hours over a period of three days. The contents of the flask were concentrated to a viscous semi-solid having a weight of 41.5 gm.

The semi-solid was acidified with hydrochloric acid and then concentrated in vacuo with the aid of a hot water bath. The resultant white solid was slurried in 150 ml. of concentrated hydrochloric acid. Insoluble sodium chloride was filtered off and air dried to yield a solid having a weight of 33.4 gm. The filtrate was concentrated on a rotary evaporator to a viscous oil of clear, amber color having a weight of 18.6 gm. Crystallization of this material from 80 - 90% ethanol failed. A small amount (1.5 gm.) of compound was recrystallized from acetone-water. The acetone-water supernatant solution was concentrated to yield 8.5 gm. of solid product. Ion exchange high pressure liquid chromatography confirmed the presence of the desired product in both precipitate and concentrate.

- 10 -

EXAMPLE 4

Into a 250 ml. round bottom flask equipped as in Example 2 was placed 7.5 gm. (0.1 mole) of glycine and 13.5 gm. (0.1 mole) of the chloromethylphosphonic acid which was prepared in the first part of Example 3. A 50% sodium hydroxide solution (24 gm. or 0.3 mole - 15.7 ml.) was added slowly with stirring. The heat of neutralization caused a temperature rise to 65°C. Heating to 90°C. was then begun, and the temperature was maintained with stirring for about 14.5 hours. The pH was maintained at 9 - 10 by additions of 50% sodium hydroxide. The reaction was carried out over several days.

The reaction mixture was chilled in an ice bath, and acidified with up to 25 ml. of concentrated hydrochloric acid so that the pH fell to about 1 - 2. The resulting liquid composition was concentrated to a solid in vacuo with hot water heat. The resultant solid was dried in a vacuum oven at 80°C. for three hours. It had a weight of about 40.4 gm. It analyzed as 13.7% phosphonomethyl glycine by ion-exchange high pressure liquid chromatography. This corresponds to 33% of the theoretical yield.

C-7073

The foregoing Examples merely illustrate certain embodiments of the present invention and should not be construed in a limiting sense. The scope of protection that is sought is set forth in the claims which follow.

As used herein the terms "amino acid" and "halo-methylphosphonic acid" are intended to cover not only the free acid species but also the salts thereof (e.g., alkali metal and ammonium) which can be used to perform the desired reaction. Similarly, the term "phosphono-methylate amino acid" is intended to cover the corresponding product formed thereby whether the reactants are in the free acid or salt form.

What is Claimed:

1. A process for the formation of phosphonomethylated amino acids which comprises:

(a) reacting a dihalide of halomethyl phosphonic acid with water to form a halomethyl phosphonic acid; and

(b) reacting the halomethyl phosphonic acid with an amino acid to form the phosphonomethylated amino acid.

2. A process as claimed in Claim 1 wherein in step (a) the dihalide is the dichloride of chloromethylphosphonic acid and the halomethyl phosphonic acid is chloromethylphosphonic acid

3. A process as claimed in Claim 1 wherein the amino acid has the formula $HO_2CRNH_2$ where R is an unsubstituted or substituted alkylene group containing 1 to 10 carbon atoms in its backbone.

4. A process as claimed in Claim 1 wherein the amino acid is glycine.

5. A process as claimed in Claim 2 wherein the amino acid has the formula $HO_2CRNH_2$ where R is an unsubstituted or substituted alkylene group containing 1 to 10 carbon atoms in its backbone.

6. A process as claimed in Claim 2 wherein the amino acid is glycine.

7. A process for the formation of phosphonomethylated amino acids which comprises:

(a) reacting a phosphorus trihalide and formaldehyde to form a dihalide of halomethylphosphonic acid;

(b) reacting the dihalide of halomethylphosphonic acid with water to form a halomethylphosphonic acid; and

(c) reacting the halomethylphosphonic acid with an amino acid to form the phosphonomethylated amino acid.

C-7073

8. A process as claimed in Claim 7 wherein in step (b) the dihalide is the dichloride of chloromethylphosphonic acid and the halomethylphosphonic acid is chloromethylphosphonic acid.

9. A process as claimed in Claim 7 wherein the amino acid has the formula $HO_2CRNH_2$ where R is an unsubstituted or substituted alkylene group containing 1 to 10 carbon atoms in its backbone.

10. A process as claimed in Claim 7 where the amino acid is glycine.

11. A process as claimed in Claim 8 wherein the amino acid has the formula $HO_2CRNH_2$ where R is an unsubstituted or substituted alkylene group containing 1 to 10 carbon atoms in its backbone.

12. A process as claimed in Claim 8 wherein the amino acid is glycine.

C-7073

**European Patent Office**

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | DE-A-2 528 633 (BUDAPESTI VEGYIMÜVEK) * Example 1, claim 1 * | 1-12 | C 07 F 9/38 |
| D,Y | US-A-2 874 184 (SHELL DEVELOPMENT) * Example 1, claim 1 * | 1-12 | |
| A | DE-A-2 914 294 (NITROKEMIA IPARTELEPEK) | 1 | |
| A,D | US-A-3 977 860 (MONSANTO) * Example 1 * | 1 | |

|  | TECHNICAL FIELDS SEARCHED (Int. Cl.4) |
|---|---|
|  | C 07 F 9/38 |

The present search report has been drawn up for all claims

| Place of search | Date of completion of the search | Examiner |
|---|---|---|
| BERLIN | 08-11-1984 | KAPTEYN H G |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82